# EUROPEAN PATENT APPLICATION

(11) **EP 4 620 305 A1**
(43) Date of publication of application: **24.09.2025**
(21) Application number: 25164284.9
(22) Date of filing: 18.03.2025
(51) Int. Cl.: A01N 57/20, A01N 43/70, A01N 25/30, A01P 13/00

(54) **HERBICIDAL COMPOSITION**

(30) Priority: 19.03.2024 US 202463567201 P
(71) Applicant: Nouryon Chemicals International B.V., 1101 BZ Amsterdam (NL)
(72) Inventor: ISLAM, Mojahedul, 1101 BZ Amsterdam (NL); WU, Yao, 1101 BZ Amsterdam (NL)
(74) Representative: Ingrassia, Fisher & Lorenz UK Ltd.

(57) **Abstract**

A herbicidal composition includes glyphosate or a derivative thereof, a phosphate ester, and a surfactant component. The phosphate ester is present in an amount of from about 1 to about 15 weight percent actives based on a total weight of the composition. The surfactant component includes at least one of a first surfactant, a second surfactant, and a third surfactant. Each of the first, second, and third surfactants, if utilized, is independently present in an amount of from about 1 to about 15 weight percent actives based on a total weight of the composition.

## Description

### TECHNICAL FIELD

The present disclosure generally relates to a herbicidal composition. More specifically, this disclosure relates to a composition that includes a phosphate ester and at least one particular surfactant.

### BACKGROUND

N-phosphonomethylglycine ("glyphosate") is an effective post-emergent foliar-applied herbicide. It is typically formulated as a water-soluble salt such as a monobasic, dibasic, or tribasic salt. Typical glyphosate salts include, for example, the mono(isopropylammonium) ("IPA"), potassium, sodium, monoethanolammonium ("MEA"), trimethylsulfonium ("TMS"), ammonium, diammonium salts, n-propylamine, ethylamine, ethylenediamine, and hexamethylenediamine salts.

It is common for farmers to use glyphosate formulations and to add suspension concentrates, emulsifiable concentrates, or water dispersible granules to those formulations prior to application. However, this can lead to destabilization of the formulations (such as flocculation) wherein these formulations undergo physical or chemical changes that lead to a loss of their intended properties and efficacy. This can result in reduced weed control, uneven application, or other negative outcomes.

More specifically, destabilization may manifest as physical incompatibility wherein mixing compounds with different physical properties, such as solubility, density, or viscosity, can lead to separation, settling, or flocculation. This can result in uneven distribution of the mixture and reduce the accuracy of application.

Moreover, formulation differences also contribute to destabilization. Pesticide formulations contain various additives, surfactants, and carriers that might not be compatible with each other. Mixing products with incompatible formulation components can lead to destabilization, reduced effectiveness, or even breakdown of the formulations.

Considering the variety of conditions and special situations under which glyphosate herbicides are used around the world, there remains a need for aqueous concentrate formulations of glyphosate, including surfactant-containing formulations, providing benefits under at least some of those conditions and situations. Moreover, there is an especial need for such formulations having high glyphosate loading, for example at least about 400 g a.e./l, that are compatible when tank mixed with other pesticide formulations under a wide range of field conditions.

Accordingly, there remains an opportunity for improvement. Furthermore, other desirable features and characteristics of the present disclosure will become apparent from the subsequent detailed description of the disclosure and the appended claims, taken in conjunction with the accompanying drawings and this background of the disclosure.

### SUMMARY

This disclosure provides a herbicidal composition that includes glyphosate or a derivative thereof, a phosphate ester, and a surfactant component. The phosphate ester is present in an amount of from about 1 to about 15 weight percent actives based on a total weight of the composition. The surfactant component includes at least one of a first surfactant, a second surfactant, and a third surfactant. The first surfactant, if utilized, is present in an amount of from about 1 to about 15 weight percent actives based on a total weight of the composition. The first surfactant has the structure: 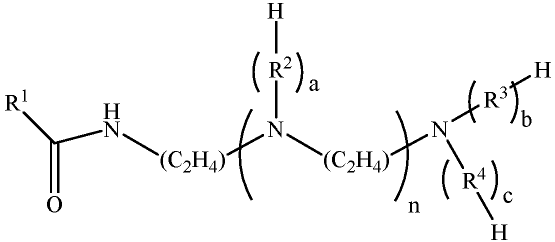 wherein R¹ is a linear or branched, saturated or unsaturated alkyl group having from 5 to 22 carbon atoms, each of R², R³ and R⁴ is independently an alkylene oxide group, a is from 0 to 10, each of b and c is independently from about 1 to about 10; and n is 0 to about 3. The second surfactant, if utilized, is present in an amount of from about 1 to about 15 weight percent actives based on a total weight of the composition and has the structure: 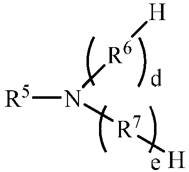 wherein R⁵ is a linear or branched, saturated or unsaturated alkyl group having from 8 to 18 carbon atoms, each of R⁶ and R⁷ is independently an alkylene oxide group, and each of d and e is independently from about 1 to about 5. The third surfactant, if utilized, is present in an amount of from about 1 to about 15 weight percent actives based on a total weight of the composition and has structure: 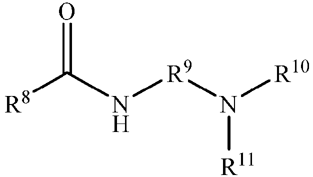 wherein R⁸ is a linear or branched alkyl or alkenyl group each optionally substituted with from 4 to 22 carbon atoms, R⁹ is an alkylene group having from 1 to 4 carbon atoms, and each of R¹⁰ and R¹¹ is independently an alkyl group having from 1 to 4 carbon atoms.

### BRIEF DESCRIPTION OF THE DRAWINGS

The present disclosure will hereinafter be described in conjunction with the following drawing figure, wherein

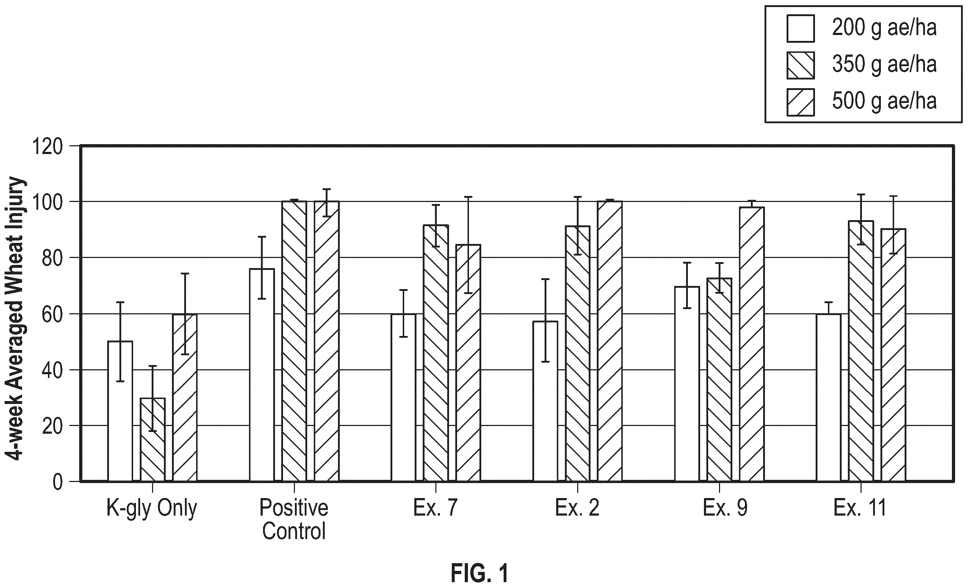

FIG. 1 is a bar-graph of 4-Week Averaged Wheat Injury as a function of Sample Type, as is described in the Examples.

### DETAILED DESCRIPTION

The following detailed description is merely exemplary in nature and is not intended to limit the current composition. Furthermore, there is no intention to be bound by any theory presented in the preceding background or the following detailed description.

Embodiments of the present disclosure are generally directed to surfactants, compositions including the same, and methods for forming the same. For the sake of brevity, conventional techniques related to making surfactants and such compositions may not be described in detail herein. Moreover, the various tasks and process steps described herein may be incorporated into a more comprehensive procedure or process having additional steps or functionality not described in detail herein. In particular, various steps in the manufacture of surfactants and associated compositions are well-known and so, in the interest of brevity, many conventional steps will only be described briefly herein or will be omitted entirely without providing the well-known process details.

In this disclosure, the terminology "about" can describe values ± 0.1, 0.5, 1, 2, 3, 4, 5, 6, 7, 8, 9, or 10%, in various embodiments. Moreover, it is contemplated that, in various non-limiting embodiments, it is to be appreciated that all numerical values as provided herein, save for the actual examples, are approximate values with endpoints or particular values intended to be read as "about" or "approximately" the value as recited. It is also contemplated that all isomers and chiral options for each compound described herein are hereby expressly contemplated for use herein in various non-limiting embodiments.

Throughout this disclosure, the terminology percent "actives" is well recognized in the art and means the percent amount of active or actual compound or molecule present as compared to, for example, a total weight of a diluted solution of a solvent and such a compound. Some compounds, such as a solvent, are not described relative to a percent actives because it is well known to be approximately 100% actives. Any one or more of the values describe herein may be alternatively described as percent actives as would be understood by the skilled person.

In various embodiments, the terminology "free of" describes embodiments that include less than about 5, 4, 3, 2, 1, 0.5, or 0.1, weight percent (or weight percent actives) of the compound or element at issue using an appropriate weight basis as would be understood by one of skill in the art. In other embodiments, the terminology "free of" describes embodiments that have zero weight percent of the compound or element at issue.

The terminology "consists essentially of" may describe various non-limiting embodiments that are free of one or more optional compounds described herein and/or free of one or more polymers, surfactants, additives, solvents, etc.

It is to be understood that the subscripts of polymers are typically described as average values because the synthesis of polymers typically produces a distribution of various individual molecules.

It is contemplated that the terminology "group" may be replaced with moiety or residue, when appropriate, as understood by those of skill in the art.

The surfactants and compositions disclosed herein may suitably include, consist of, or consist essentially of the components, elements, and process delineations described herein. The embodiments illustratively disclosed herein suitably may be practiced in the absence of any element which is not specifically disclosed herein.

### Herbicidal Composition

This disclosure provides a herbicidal composition (hereinafter "composition"). In some embodiments, this composition is further described as an aqueous herbicidal concentrate composition. The composition includes (a) glyphosate or a derivative thereof, (b) a phosphate ester and (c) a surfactant component. Each is described below.

In one embodiment, the composition is or includes (a), (b), and (c).

In another embodiment, the composition consists essentially of (a), (b), and (c).

In still another embodiment, the composition consists of (a), (b), and (c).

In other embodiments, the composition includes a), (b), and (c) and one or more additives described below.

In other embodiments, the composition consists essentially of a), (b), and (c) and one or more additives described below.

In other embodiments, the composition consists of a), (b), and (c) and one or more additives described below.

In any of the above embodiments, the composition may or may not include water, either as independently added or as included with one or more of the components (a), (b), and/or (c).

Moreover, the terminology "consists essentially of" describes that the composition may be free of, or include less than 5, 4, 3, 2, 1, or 0.5, weight percent actives of one or more polymers, solvents, actives, or additives that are not (a), (b), or (c). Alternatively, in such embodiments, the composition may be entirely free of such polymers, solvents, actives, or additives that are not (a), (b), or (c). In addition, such embodiments may or may not include water.

### Glyphosate

Referring now to (a) glyphosate, this component is typically primarily responsible for plant suppression or death (i.e., bioefficacy) and is instrumental in imparting long-term herbicidal control. The glyphosate may include or be glyphosate acid and/or agronomically acceptable derivatives thereof. Derivatives include salts, esters, or compounds which are converted to glyphosate in plant tissues or which otherwise provide glyphosate anions. In this regard it is to be noted that the term "glyphosate," "glyphosate derivative," etc. when used herein is understood to encompass glyphosate, derivatives and mixtures thereof unless the context requires otherwise. Furthermore, the term "agronomically acceptable" includes glyphosate derivatives that allow agriculturally and economically useful herbicidal activity of a glyphosate anion in residential or industrial applications.

Typically, the glyphosate includes or is one or more of the more water-soluble salts of glyphosate. For example, at least about 50, 75, 90, 95, 98, 99, or 99.9, wt % of the glyphosate may be one or more of the more water-soluble salts of glyphosate. The water solubility of such salts allows formulation of highly concentrated herbicidal compositions that can be easily transported and readily diluted with water in the preparation of sprayable RTU compositions at the site of intended use.

Non-limiting examples of suitable salts of glyphosate include monobasic, dibasic, or tribasic salts and include organic amines, alkali metal, alkaline earth metal, ammonium (e.g., monoammonium, diammonium, or triammonium) and sulfonium (e.g., monosulfonium, disulfonium, or trimethylsulfonium ("TMS") salts of glyphosate. Organic amine salts can include aliphatic or aromatic amine salts and can include primary, secondary, tertiary, or quaternary amine salts. Non-limiting representative examples of such organic amine salts include isopropylamine ("IPA"), n- propylamine, ethylamine, dimethylamine ("DMA"), monoethanolamine ("MEA"), triethanolamine ("TEA"), ethylenediamine and hexamethylenediamine salts of glyphosate. Non-limiting representative examples of alkali metal salts include potassium and sodium salts of glyphosate.

In various embodiments, the glyphosate includes a salt chosen from potassium, monoammonium, diammonium, sodium, MEA, n-propylamine, IPA, ethylamine, DMA, ethylenediamine, hexamethylenediamine and TMS salts and combinations thereof. In various embodiments, the MEA, diammonium, and potassium salts and combinations thereof are especially utilized.

In various embodiments, the glyphosate includes or is a blend of the potassium salt of glyphosate and the monoethanolamine salt of glyphosate. The weight ratio of the potassium salt of glyphosate in grams acid equivalent to the monoethanolamine salt of glyphosate in grams acid equivalent may be from about 1:1 to about 4:1, such as about 7:3. In some embodiments, the weight ratio of the potassium salt of glyphosate in grams acid equivalent to the monoethanolamine salt of glyphosate in grams acid equivalent is about 7:3, which enables weight ratios of co-surfactants to amidoalkylamine coupling agents to vary from at least about 60:40, to at least about 65:35, and in some cases to at least about 70:30. In various non-limiting embodiments, all values and ranges of values, both whole and fractional, including and between those described above are hereby expressly contemplated for use herein.

In other embodiments, the glyphosate is or includes a blend of the potassium salt of glyphosate and the ammonium salt of glyphosate; a blend of the isopropylammonium salt of glyphosate and the ammonium salt of glyphosate; a blend of the potassium salt of glyphosate and the isopropylamine salt of glyphosate; a blend of the potassium salt of glyphosate and the triethanolamine salt of glyphosate; or a blend of the dimethylamine salt of glyphosate and the triethanolamine salt of glyphosate. In some embodiments, these glyphosate salts may be combined in a ratio of from about 1:4 to about 4 :1 (e.g. in a ratio of about 1:1 to about 4 :1). In various non-limiting embodiments, all values and ranges of values, both whole and fractional, including and between those described above are hereby expressly contemplated for use herein.

The composition of this disclosure may include water such that it is described as an aqueous composition. The term "aqueous," as used herein, refers to compositions comprising water in an amount that renders it the predominant solvent. "Aqueous" is not intended to exclude the presence of nonaqueous (i.e., organic) solvents, as long as water is present. Examples of suitable nonaqueous solvents include toluene, xylenes, petroleum naphtha, tetrahydrofurfuryl alcohol, ethylene glycol, polyethylene glycol, propylene glycol, ethanol, and hexanol.

The concentration of the glyphosate in an aqueous composition is typically at least about 300 grams acid equivalent per liter ("g a.e./L"), such as at least about 360 g a.e./L, or such as at least about 390 g a.e./L. In typical compositions, the glyphosate concentration is not lower than 400 g a.e./L or about 420 g a.e./L, in particularly typical compositions not lower than about 480 g a.e./L, about 500 g a.e./L, about 540 g a.e./L, about 580 g a.e./L, about 600 g a.e./L, or even about 620 g a.e./L, for example about 480 to about 540 g a.e./L, or about 480 to about 600 g a.e./L, or more. Accordingly, in some embodiments, the concentration of the glyphosate is from about 300 g a.e./L and about 600 g a.e./L, between about 420 g a.e./L and about 600 g a.e./L, or between about 480 g a.e./L and about 540 g a.e./L. In various compositions, the concentration of the glyphosate may be from about 480 g a.e./L to about 620 g a.e./L, for example from about 480 g a.e./L to about 600 g a.e./L, or from about 540 to about 620 g a.e./L. In other embodiments, the composition is further described as an RTU formulations prepared by diluting herbicidal concentrates with appropriate amounts of water. The concentration of the glyphosate in RTU compositions is typically at least about 1 g a.e./L, and generally from about 1 g a.e./L to about 50 g a.e./L. In order to provide more economical RTU formulations providing prolonged herbicidal activity, the concentration of the glyphosate component in the RTU composition is more typically from about 5 g a.e./L to about 20 g a.e./L. In various non-limiting embodiments, all values and ranges of values, both whole and fractional, including and between those described above are hereby expressly contemplated for use herein.

In other embodiments, the composition is not an aqueous or liquid composition and is instead a solid composition. In such embodiments, the concentrate of glyphosate is typically greater than 30% by weight acid equivalent of the composition, such as from about 30%> to about 90% by weight acid equivalent of the composition, such as from about 40% to about 90% by weight acid equivalent of the composition, and more typically from about 50% to about 80% by weight acid equivalent of the composition. In various non-limiting embodiments, all values and ranges of values, both whole and fractional, including and between those described above are hereby expressly contemplated for use herein.

### Co-Herbicide

The composition may further include or be free of a co-herbicide. In various embodiments, the composition is a tank mixed ready to use formulation further comprising a co-herbicide. In some embodiments, water-soluble co-herbicides can be included in the composition. Water-soluble co-herbicides include acifluorfen, acrolein, amitrole, asulam, benazolin, bentazon, bialaphos, bromacil, bromoxynil, chloramben, chloroacetic acid, clopyralid, 2,4-D, 2,4-DB, dalapon, dicamba, dichlorprop, difenzoquat, diquat, endothall, fenac, fenoxaprop, flamprop, flumiclorac, fluoroglycofen, flupropanate, fomesafen, fosamine, glufosinate, imazameth, imazamethabenz, imazamox, imazapic, imazapyr, imazaquin, imazethapyr, ioxynil, MCPA, MCPB, mecoprop, methylarsonic acid, naptalam, nonanoic acid, paraquat, picloram, quinclorac, sulfamic acid, 2,3,6-TBA, TCA, triclopyr and water-soluble salts thereof.

In some embodiments, co-herbicides that are not readily water-soluble can be coupled into the composition. In addition, the composition may include finely- divided, water-insoluble herbicides. Examples of herbicides having limited water solubility include, for example, acetochlor, aclonifen, alachlor, ametryn, amidosulfuron, anilofos, atrazine, azafenidin, azimsulfuron, benfluralin, benfuresate, bensulfuron-methyl, bensulide, benzofenap, bifenox, bromobutide, bromofenoxim, butachlor, butamifos, butralin, butroxydim, butylate, cafenstrole, carbetamide, carfentrazone-ethyl, chlomethoxyfen, chlorbromuron, chloridazon, chlorimuron-ethyl, chlornitrofen, chlorotoluron, chlorpropham, chlorsulfuron, chlorthal- dimethyl, chlorthiamid, cinmethylin, cinosulfuron, clethodim, clodinafop-propargyl, clomazone, clomeprop, cloransulam-methyl, cyanazine, cycloate, cyclosulfamuron, cycloxydim, cyhalofop- butyl, daimuron, desmedipham, desmetryn, dichlobenil, diclofop-methyl, diflufenican, dimefuron, dimepiperate, dimethachlor, dimethametryn, dimethenamid, dinitramine, dinoterb, diphenamid, dithiopyr, diuron, EPTC, esprocarb, ethalfluralin, ethametsulfuron-methyl, ethofumesate, ethoxysulfuron, etobenzanid, fenoxaprop-ethyl, fenuron, flamprop-methyl, flazasulfuron, fluazifop-butyl, fluchloralin, flumetsulam, flumiclorac-pentyl, flumioxazin, fluometuron, fluorochloridone, fluoroglycofen-ethyl, flupoxam, flurenol, fluridone, fluroxypyr- 1-methylheptyl, flurtamone, fluthiacet-methyl, fomesafen, halosulfuron, haloxyfop-methyl, hexazinone, imazamox, imazosulfuron, indanofan, isoproturon, isouron, isoxaben, isoxaflutole, isoxapyrifop, lactofen, lenacil, linuron, mefenacet, mesotrione, metamitron, metazachlor, methabenzthiazuron, methyldymron, metobenzuron, metobromuron, metolachlor, metosulam, metoxuron, metribuzin, metsulfuron, molinate, monolinuron, naproanilide, napropamide, naptalam, neburon, nicosulfuron, norflurazon, orbencarb, oryzalin, oxadiargyl, oxadiazon, oxasulfuron, oxyfluorfen, pebulate, pendimethalin, pentanochlor, pentoxazone, phenmedipham, piperophos, pretilachlor, primisulfuron, prodiamine, prometon, prometryn, propachlor, propanil, propaquizafop, propazine, propham, propisochlor, propyzamide, prosulfocarb, prosulfuron, pyraflufen-ethyl, pyrazolynate, pyrazosulfuron-ethyl, pyrazoxyfen, pyributicarb, pyridate, pyriminobac-methyl, quinclorac , quinmerac, quizalofop-ethyl, rimsulfuron, sethoxydim, siduron, simazine, simetryn, sulcotrione, sulfentrazone, sulfometuron, sulfosulfuron, tebutam, tebuthiuron, terbacil, terbumeton, terbuthylazine, terbutryn, thenylchlor, thiazopyr, thifensulfuron, thiobencarb, tiocarbazil, tralkoxydim, triallate, triasulfuron, tribenuron, trietazine, trifluralin, triflusulfuron, and vernolate.

### Phosphate Ester (b)

Referring now to the phosphate ester, the phosphate ester may be an alkoxylated phosphate ester or a non-alkoxylated phosphate ester. Alternatively, an alkoxylated phosphate ester may be used in conjunction with a non-alkoxylated phosphate ester. Two or more of any one or more types of phosphate esters may be used.

The phosphate ester is present in an amount of from about 1 to about 15 weight percent actives based on a total weight of said composition. In various embodiments, this amount is from about 2 to about 14, about 3 to about 13, about 4 to about 12, about 5 to about 11, about 6 to about 10, about 7 to about 9, or about 8 to about 9, weight percent actives based on a total weight of said composition. In other embodiments, this amount is from about 4 to about 8, about 4 to about 6, or about 6 to about 8, weight percent actives based on a total weight of said composition. In still further embodiments, this amount is from about 0.5 to about 5, about 0.5 to about 3, about 1 to about 4.5, about 1.5 to about 4, about 2 to about 3.5, or about 2.5 to about 3, weight percent actives based on a total weight of the composition. In various non-limiting embodiments, all values and ranges of values, both whole and fractional, including and between those described above are hereby expressly contemplated for use herein.

In various embodiments, the phosphate ester is alkoxylated and has the formula:

{R¹²O-[CH(CH₃)CH₂O)]_{g}[CH₂-CH₂O]_{f}}ₓP(=O)(O⁻X⁺)_{y} (I)

wherein the propylene oxide group and the ethylene oxide group may be reversed in order, and wherein f is from 0 to about 50 and g is from 0 to about 30 so long as f+g > 0; wherein each of x and y is independently 1 or 2, such that when x = 1 then y = 2, and when x = 2 then y = 1; and wherein R¹² is a linear or branched C₁-C₃₀ alkyl or alkenyl group and X⁺ is H⁺, an earth metal or alkaline earth metal ion, NH4⁺, an amine, an alkanolamine or CH₃-(CH₂)ⱼ-C(O)NH(CH₂)ₖN⁺HR¹³R¹⁴, wherein j is from 0 to about 30, k is from about 1 to about 5, and each of R¹³ and R¹⁴ is independently chosen from -CH₂CH₂OH and linear or branched alkyl groups having 1 to 5 carbon atoms. In various non-limiting embodiments, all values and ranges of values, both whole and fractional, including and between those described above are hereby expressly contemplated for use herein.

In various embodiments, the propylene oxide group and the ethylene oxide group, if either or both are present, are present in a block or random orientation. In the aforementioned formula, the propylene oxide group may be bonded to the R¹²O- group or to the phosphorous atom. Alternatively, the ethylene oxide group may be bonded to the R¹²O- group or to the phosphorous atom. Moreover, if x is 2 then each {R¹²O-[CH(CH₃)CH₂O)]_{g}[CH₂-CH₂O]_{f}} group may be independent of one another such that one group may include a block or random arrangement of propylene oxide and ethylene oxide groups that is the same or different from the other group. Moreover, the arrangement of individual propylene oxide groups and ethylene oxide groups may be the same or different in each {R¹²O-[CH(CH₃)CH₂O)]_{g}[CH₂-CH₂O]_{f}} group. In various embodiments, the ratio of propylene oxide to ethylene oxide groups from about 1:1 to 10:1 or vice versa. In one embodiment, this ratio is from about 2:1 to 5:1, or vice versa. In various non-limiting embodiments, all values and ranges of values, both whole and fractional, including and between those described above are hereby expressly contemplated for use herein.

In other embodiments, it is also contemplated that the counter-ion X may be chosen from an optionally substituted heterocyclic or heteroaryl group including at least one nitrogen ring atom; and a monovalent inorganic cation.

In various embodiments, f is from about 0 to about 50, about 5 to about 45, about 10 to about 40, about 15 to about 35, about 20 to about 30, about 25 to about 30, about 1 to about 15, about 5 to about 15, about 5 to about 10, etc. In other embodiments, g is from about 0 to about 30, about 5 to about 25, about 10 to about 20, or about 15 to about 20. In various embodiments, g is 0 and f is about 0 to about 5. In various non-limiting embodiments, all values and ranges of values, both whole and fractional, including and between those described above are hereby expressly contemplated for use herein.

Referring now to R¹², this group may include any number of carbon atoms from about 1 to about 30, e.g. about 2 to about 29, about 3 to about 28, about 4 to about 27, about 5 to about 26, about 6 to about 25, about 7 to about 24, about 8 to about 23, about 9 to about 22, about 10 to about 21, about 11 to about 20, about 12 to about 19, about 13 to about 18, about 14 to about 17, or about 15 to about 16, carbon atoms. In other embodiments, R¹² includes about 8 to about 14 carbon atoms. In various non-limiting embodiments, all values and ranges of values, both whole and fractional, including and between those described above are hereby expressly contemplated for use herein.

In one embodiment, the R¹² group is linear. In another embodiment, the R¹² group is branched. In a further embodiment, the R¹² group is substituted. In still another embodiment, the R¹² group is unsubstituted. In one embodiment, the R¹² group is chosen from 2-ethylhexyl, 2-ethylheptyl, and isotridecyl. In another embodiment the R¹² group is 2-ethylhexyl. In a further embodiment, the R group is isotridecyl. In still a further embodiment, the R¹² group is straight or branched butyl, pentyl, hexyl, cyclohexyl, heptyl, octyl, nonyl, decyl, undecyl, or dodecyl. In one embodiment, the R group includes a non-aromatic cyclic moiety.

Any source can be used to provide the R¹² group of formula. In one embodiment, R¹² is derived from a petroleum source. In one embodiment, R¹² is derived from a natural source. Typical natural sources are oils and fats, such as oils and fats from land animals, marine animals, and plants. Sources of fat and oils from land animals include butterfat, depot fat, lard oil, neat's foot oil, and tallow (such as from beef or mutton). Sources of fat and oils from marine animals include cold-liver oil, herring oil, menhaden oil, sardine oil, sperm oil, and whale oil. Sources of fats and oils from plants include babassu oil, castor oil, cocoa butter, coconut oil, corn oil, cotton seed oil, linseed oil, mustard oil, neem oil, niger-seed oil, oiticica oil, olive oil, palm oil, palm-kernel oil, peanut oil, perilla oil, poppy-seed oil, rapeseed oil, safflower oil, sesame oil, soybean oil, sunflower-seed oil, tall oil, tung oil, and wheat germ oil.

In one approach, suitable oils and fats are chosen from coconut, soybean (soya), tallow, palm, palm kernel, rapeseed, lard, sunflower, corn, safflower, canola, olive, peanut, and combinations thereof. In another approach, the suitable oils and fats are chosen from soybean oil, tallow or coconut oil, such as fully or partially hydrogenated soybean oil, fully or partially hydrogenated tallow, or fully or partially hydrogenated coconut oil, and combinations thereof. In some embodiments, the fatty acid is fully or partially hydrogenated tallow, and in certain embodiments, the source of the fatty acid is fully hydrogenated tallow.

Suitable fatty acids may include saturated acids such as isovaleric acid, valeric acid, caproic acid, enanthic acid, caprylic acid, pelargonic acid, capric acid, lauric acid, tridecylic acid, myristic acid, pentadecylic acid, palmitic acid, margaric acid, stearic acid, arachidic acid, phytanic acid, behenic acid, lignoceric acid, cerotic acid and montanic acid; or monounsaturated acids such as caproleic acid, palmitoleic acid, oleic acid, vaccenic acid, elaidic acid, brassidic acid, erucic acid, and nervonic acid; diunsaturated acids such as linoleic acid; triunsaturated acids such as eleosteric acid and linolenic acid; and tetraunsaturated acids such as arachidonic acid. In some embodiments, the fatty acids are stearic acid, arachidic acid, phytanic acid, behenic acid, lignoceric acid, cerotic acid, montanic acid, oleic acid, vaccenic acid elaidic acid, brassidic acid, erucic acid, nervonic acid, linoleic acid, eleosteric acid, linolenic acid, and arachidonic acid. In yet other embodiments, the suitable fatty acids are chosen from stearic acid, oleic vaccenic acid, elaidic acid, linoleic acid, eleosteric acid, linolenic acid.

In other embodiments, R¹² is a linear or branched alkyl or alkenyl radical(s) comprising - C₁-C₃₀, such as -C₄-C₃₀, or -C₁₈-C₃₀. In some embodiments, R¹² includes at least C₆, at least C₈, at least C₉, at least C₁₂, at least C₁₃, or C₁₂-C₁₈. In other embodiments, R¹² includes C₁₈-C₃₀. In various non-limiting embodiments, all values and ranges of values, both whole and fractional, including and between those described above are hereby expressly contemplated for use herein.

R¹² may be saturated or unsaturated. R¹² may have an iodine value of 5-30. R¹² may be hydrogenated, such as partially or fully hydrogenated. In some embodiments, R may be fully hydrogenated. In various non-limiting embodiments, all values and ranges of values, both whole and fractional, including and between those described above are hereby expressly contemplated for use herein.

In further embodiments, j is from 0 to about 30, e.g. about from about 1 to about 30, e.g. about 2 to about 29, about 3 to about 28, about 4 to about 27, about 5 to about 26, about 6 to about 25, about 7 to about 24, about 8 to about 23, about 9 to about 22, about 10 to about 21, about 11 to about 20, about 12 to about 19, about 13 to about 18, about 14 to about 17, or about 15 to about 16. Moreover, k is from about 1 to about 5, e.g. about 2 to about 4, or about 2 to about 3. In other embodiments, j is about 3 to 7 and k is about 1 to 3. In various non-limiting embodiments, all values and ranges of values, both whole and fractional, including and between those described above are hereby expressly contemplated for use herein.

Relative to R¹³ and R¹⁴, each may be a linear or branched alkyl groups having 1, 2, 3, 4, or 5 carbon atoms. In various non-limiting embodiments, all values and ranges of values, both whole and fractional, including and between those described above are hereby expressly contemplated for use herein.

With respect to the counter-ion X, in one embodiment R¹³ and R¹⁴ are independently chosen from linear or branched -C₁-C₅alkyl, in one embodiment from linear or branched -C₁-C₄alkyl, in one embodiment from linear or branched -C₁-C₃alkyl, in one embodiment from -C₁-C₂alkyl. In one embodiment R¹³ and R¹⁴ are each methyl. In various embodiments, j = 0 to 30, in one embodiment j = 0 to 24, in one embodiment j = 0 to 18, in one embodiment j = 0 to 12, in one embodiment j = 0 to 10, in one embodiment j = 0 to 8, in one embodiment j = 0 to 6, in one embodiment j = 0 to 4, in one embodiment j = 0 to 2. In other embodiments, k = 1-5, in one embodiment k = 1-3, in one embodiment k = 3. In one embodiment X is a quaternized or protonated alkyl amidopropyldimethylamine, in one embodiment a quaternized or protonated caproic amidopropyldimethylamine, in one embodiment a quaternized or protonated caprylic amidopropyldimethylamine, in one embodiment a quaternized or protonated capric amidopropyldimethylamine, in one embodiment a quaternized or protonated coco amidopropyldimethylamine. In one embodiment X is a mixture of any two or more quaternized or protonated amidopropyldimethylamine compounds. In various non-limiting embodiments, all values and ranges of values, both whole and fractional, including and between those described above are hereby expressly contemplated for use herein.

In one embodiment, R¹² is chosen from 2-ethylhexyl, 2-ethylheptyl, and isotridecyl/ in one embodiment R¹² is 2-ethylhexyl. In one aspect of the disclosure, R¹² is a C₁-C₇ linear or branched alkyl or alkenyl.

In various embodiments, X is an optionally substituted heterocyclic or heteroaryl group including at least one nitrogen ring atom. In one embodiment X is chosen from piperidinyl, piperazinyl, morpholinyl, pyrrolidinyl, pyrrolyl, pyrazolyl, pyridinyl, pyrazinyl, pyrimidinyl, pyridazinyl, indolyl, isoindolyl, imidazolyl, oxazolyl, and isooxazolyl, each of which is optionally substituted. In one embodiment X is a monocyclic, optionally substituted, saturated or unsaturated heterocyclic group with at least one nitrogen ring atom. In one embodiment X is a bicyclic, optionally substituted, saturated or unsaturated heterocyclic group with at least one nitrogen ring atom. In one embodiment X is a polycyclic, optionally substituted, saturated or unsaturated heterocyclic group with at least one nitrogen ring atom. In one embodiment X is a mixture of two or more of any of the foregoing optionally substituted saturated or unsaturated heterocyclic groups with at least one nitrogen ring atom. In one embodiment X is morpholinyl.

In various embodiments, X is a monovalent inorganic cation. In one embodiment X is chosen from Li⁺, K⁺, Na⁺, Rb⁺, Cs⁺, and NH₄⁺. In one embodiment X is Na⁺. In one embodiment X is K⁺. In one embodiment X is NH₄⁺.

In one embodiment, the phosphate ester includes:
a phosphate monoester having the formula:

   {R¹²O-[CH(CH₃)CH₂O)]_{g}[CH₂-CH₂O]_{f}}ₓP(=O)(O⁻X⁺)_{y}
wherein R¹² is a linear or branched C8-C18 alkyl group, g is 0, f is 0 to 8, x is 1, and y is 2; and
a phosphate diester having the formula:

   {R¹²O-[CH(CH₃)CH₂O)]_{g}[CH₂-CH₂O]_{f}}ₓP(=O)(O⁻X⁺)_{y} (I)
wherein R¹² is a linear or branched C8-C18 alkyl group, g is 0, f is 0 to 8, x is 2, and y is 1. It is also contemplated that any of the aforementioned variables described immediately above may be any described herein.

It is contemplated that the ratio of monoester to diester is not particularly limited. In various embodiments, a mole ratio of monoesters to diesters is from about 1:1 to 12:1 or vice versa. In other embodiments, the mole ratio is from about 1.5:1 to 5:1 or vice versa. In further embodiments, the ratio is from about 1.5:1 to 3:1 or vice versa. In still other embodiments, a mole ratio of monoesters to diesters is from about 8:1 to 12:1 or vice versa. In still other embodiments, a mole ratio of monoesters to diesters is from about 8.5:1 to 10.5:1 or vice versa. In still other embodiments, a mole ratio of monoesters to diesters is from about (1 to 12):1 to (1 to 12):1 or vice versa. Moreover, all values, whole and fractional, between and including 1 and 12, for both members of the ratio above, are hereby expressly contemplated for use herein in various non-limiting embodiments. In various non-limiting embodiments, the phosphate ester may be as described in, or may be formed as described in, U.S. Pat. No. 11,632,592, which is expressly incorporated herein in its entirety in non-limiting embodiments. In various non-limiting embodiments, all values and ranges of values, both whole and fractional, including and between those described above are hereby expressly contemplated for use herein.

### Surfactant Component (c)

The (c) surfactant component includes at least one of (1) a first surfactant, (2) a second surfactant, and (3) a third surfactant. The surfactant component may include (1) and (2) and be free of (3), or include (1) and (3) and be free of (2), or include (2) and (3) and be free of (1). The weight or molar ratio of (1), (2), and (3) is not particularly limited. In various embodiments, the weight or molar ratio of (1):(2):(3) is about 1:1:0, about 1:0:1, or about 0:1:1 In other embodiments, the weight or molar ratio of (1):(2):(3) is about (0-10):(0-10):(0-10), (0-5):(0-5):(0-5), or (0-1):(0-1):(0-1). In other embodiments, the weight or molar ratio of (1):(2):(3) is about 1:0:1, or about 0:1:1 It is also contemplated that (1) may be used to the exclusion of (2) and (3), that (2) may be used to the exclusion of (1) and (3), or that (3) may be used to the exclusion of (1) and (2). In various non-limiting embodiments, all values and ranges of values, both whole and fractional, including and between those described above are hereby expressly contemplated for use herein.

### (1) First Surfactant

Referring now to the (1) first surfactant, this surfactant, when utilized, is present in an amount of from about 1 to about 15 weight percent actives based on a total weight of said composition. In various embodiments, this amount is from about 2 to about 14, about 3 to about 13, about 4 to about 12, about 5 to about 11, about 6 to about 10, about 7 to about 9, or about 8 to about 9, weight percent actives based on a total weight of said composition. In other embodiments, this amount is from about 4 to about 8, about 4 to about 6, or about 6 to about 8, weight percent actives based on a total weight of said composition. In various non-limiting embodiments, all values and ranges of values, both whole and fractional, including and between those described above are hereby expressly contemplated for use herein.

The (1) first surfactant has the structure as follows: 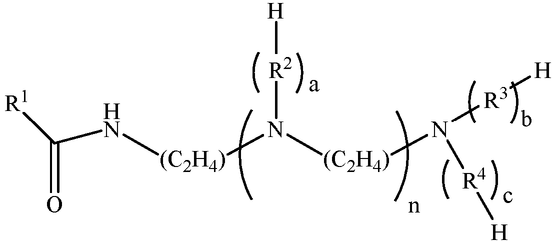 wherein R¹ is a linear or branched, saturated or unsaturated alkyl group having from 5 to 22 carbon atoms, each of R², R³ and R⁴ is independently an alkylene oxide group, a is from 0 to 10, each of b and c is independently from about 1 to about 10; and n is 0 to about 3.

In various embodiments, R¹ is a linear group. In other embodiments, R¹ is a branched group. R¹ may be an alkyl group which is saturated or an alkenyl group which is unsaturated. R¹ may have from 6 to 21, 7 to 20, 8 to 19, 9 to 18, 10 to 17, 11 to 16, 12 to 15, or 13 to 14 carbon atoms. In other embodiments, R¹ has from 8 to 20, 8 to 18, 8 to 16, 8 to 14, 8 to 12, 8 to 10, 12 to 20, 12 to 18, 12 to 16, or 12 to 14 carbon atoms. In various non-limiting embodiments, all values and ranges of values including and between those described above are hereby expressly contemplated for use herein.

Each of R², R³ and R⁴ is independently an alkylene oxide group. The subscript a is 0 to about 10. If a is zero then R² does not exist and the hydrogen atom is directly bonded to the nitrogen atom. In addition, each of b and c is independently about 1 to about 10. Each of R², R³ and R⁴ can independently be a single alkylene oxide group or more than one, e.g. up to about 10, alkylene oxide groups. Each of the alkylene oxide groups may be as described above. Each set of alkylene oxide groups may be arranged randomly, in blocks, etc. In various embodiments, a, b, and/or c is from about 1 to about 10, about 2 to about 9, about 3 to about 8, about 4 to about 7, or about 5 to about 6. Alternatively, a may be a fractional number that is greater than zero but less than 1, Moreover, n may be 0, 1, 2, or 3. In various non-limiting embodiments, all values and ranges of values, both whole and fractional, including and between those described above are hereby expressly contemplated for use herein.

In one embodiment, R¹ is a linear alkyl group having from about 12 to about 18 carbon atoms, e.g. about 12, 13, 14, 15, 16, 17, or 18 carbon atoms. In another embodiment, R¹ is a soy group. Alternatively, R¹ is a coco group, moiety, or residue. In related embodiments, n is 1. In other embodiments, the alkylene oxide groups of R², R³ and R⁴ are ethylene oxide groups and a is from about 1 to about 6, e.g. 1, 2, 3, 4, 5, or 6. In other embodiment, a is about 1 to about 4, e.g. 1, 2, 3, or 4. In various non-limiting embodiments, all values and ranges of values, both whole and fractional, including and between those described above are hereby expressly contemplated for use herein.

### (2) Second Surfactant

Referring now to the (2) second surfactant, this surfactant, when utilized, is present in an amount of from about 1 to about 15 weight percent actives based on a total weight of said composition. In various embodiments, this amount is from about 2 to about 14, about 3 to about 13, about 4 to about 12, about 5 to about 11, about 6 to about 10, about 7 to about 9, or about 8 to about 9, weight percent actives based on a total weight of said composition. In other embodiments, this amount is from about 2 to about 8, about 4 to about 6, about 4 to about 8, about 6 to about 8, etc., weight percent actives based on a total weight of said composition. In various non-limiting embodiments, all values and ranges of values, both whole and fractional, including and between those described above are hereby expressly contemplated for use herein.

The second surfactant has the following structure: 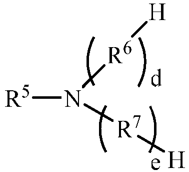 wherein R⁵ is a linear or branched, saturated or unsaturated alkyl group having from 8 to 18 carbon atoms, each of R⁶ and R⁷ is independently an alkylene oxide group, and each of d and e is independently from about 1 to about 5.

In various embodiments, R⁵ is a linear group. In other embodiments, R⁵ is a branched group. R⁵ may be an alkyl group which is saturated or an alkenyl group which is unsaturated. R⁵ may have from 9 to 18, 10 to 17, 11 to 16, 12 to 15, or 13 to 14 carbon atoms. In other embodiments, R⁵ has from 8 to 18, 8 to 16, 8 to 14, 8 to 12, 8 to 10, 12 to 20, 12 to 18, 12 to 16, or 12 to 14 carbon atoms. In various non-limiting embodiments, all values and ranges of values including and between those described above are hereby expressly contemplated for use herein.

In other embodiments, each of R⁶ and R⁷ is independently an alkylene oxide group. The alkylene oxide group may be an ethylene oxide group, a propylene oxide group, or a butylene oxide group. In addition, each of d and e independently about 1 to about 5. This means that each of R⁶ and R⁷ can independently be a single alkylene oxide group or more than one, e.g. up to about 5, alkylene oxide groups. Each of the alkylene oxide groups may be as described above. Each set of alkylene oxide groups may be arranged randomly, in blocks, etc. In various embodiments, d and/or e is from about 1 to about 5, about 2 to about 4, or about 2 to about 3. In various non-limiting embodiments, all values and ranges of values, both whole and fractional, including and between those described above are hereby expressly contemplated for use herein.

In various embodiments, R⁵ is a coco group, moiety, or residue. In other embodiments, each of R⁶ and R⁷ is an ethylene oxide group. In still other embodiments, each of d and e is about 1.

### (3) Third Surfactant

Referring now to the (3) third surfactant, this surfactant, when utilized, is present in an amount of from about 1 to about 15 weight percent actives based on a total weight of said composition. In various embodiments, this amount is from about 2 to about 14, about 3 to about 13, about 4 to about 12, about 5 to about 11, about 6 to about 10, about 7 to about 9, or about 8 to about 9, weight percent actives based on a total weight of said composition. In other embodiments, this amount is from about 2 to about 8, about 4 to about 6, about 4 to about 8, about 6 to about 8, etc., weight percent actives based on a total weight of said composition. In various non-limiting embodiments, all values and ranges of values, both whole and fractional, including and between those described above are hereby expressly contemplated for use herein.

The third surfactant has the structure: 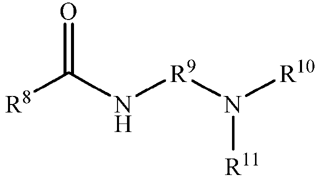 wherein R⁸ is a linear or branched alkyl or alkenyl group each optionally substituted with from 4 to 22 carbon atoms, R⁹ is an alkylene group having from 1 to 4 carbon atoms, and each of R¹⁰ and R¹¹ is independently an alkyl group having from 1 to 4 carbon atoms. In various non-limiting embodiments, all values and ranges of values, including and between those described above are hereby expressly contemplated for use herein.

In various embodiment, R⁸ has from about 4 to about 22, about 5 to about 21, about 6 to about 20, about 7 to about 19, about 8 to about 18, about 9 to about 17, about 10 to about 16, about 11 to about 15, about 12 to about 14, or about 13 to about 14, carbon atoms. Moreover, R⁹ may have about 1, 2, 3, or 4 carbon atoms. Furthermore, each of R¹⁰ and R¹¹ can independently have 1, 2, 3, or 4 carbon atoms. In various non-limiting embodiments, all values and ranges of values, including and between those described above are hereby expressly contemplated for use herein.

In various embodiments, the composition includes a concentration ratio of glyphosate in grams acid equivalent ("g a.e./L") to the surfactant component and/or any one or more of the first, second, and third surfactants of from about 1:1 to about 50:1, about 2 :1 to about 20: 1, about 2 :1 to about 10:1, about 3:1 to about 10:1, or about 3:1 to about 5:1, such as about 4:1. In other embodiments, total surfactant loadings of about 120 g/L to about 150 g/L, such as about 135 g/L, can be attained in compositions including glyphosate salt loadings of about 480 g a.e./L to about 600 g a.e./L, such as about 540 g/L. In still other embodiments, such as solid composition, a weight ratio of glyphosate in grams acid equivalent ("g a.e.") to the surfactant component and/or any one or more of the first, second, and third surfactants in grams may generally vary from about 1:1 to about 50:1, e.g. about 2 :1 to about 20: 1, about 2:1 to about 10:1, from about 3:1 to about 10:1, or about 3:1 to about 5:1, such as about 4:1. In various non-limiting embodiments, all values and ranges of values, both whole and fractional, including and between those described above are hereby expressly contemplated for use herein.

The composition may also include, or be free of, one or more additives such as conventional adjuvants, excipients, or additives known to those skilled in the art. These additives may be introduced into the composition to provide or improve certain desired properties or characteristics. In various embodiments, the one or more additives may be chosen from foam-moderating agents, surfactants, preservatives or anti-microbials, antifreeze agents, solubility-enhancing agents, dyes, pH adjusters and thickening agents, and combinations thereof.

In other embodiments, the composition may include, or be free of, one or more safening agents that inhibit plant injury caused by the presence of N-(phosphonomethyl)iminodiacetic acid ("PMIDA"). Suitable safening agents are described in U.S. 8,129,564, which is herein incorporated by reference in its entirety in various non-limiting embodiments. Typically, the safening agent includes a metal ion that is subject to formation of a complex or salt with N-(phosphonomethyl)iminodiacetic acid or an anion formed by deprotonation or partial deprotonation thereof, the formation of such complex or salt being effective to inhibit significant leaf necrosis in the crop of transgenic glyphosate-tolerant cotton plants induced by N-(phosphonomethyl)iminodiacetic acid or salt thereof present in the composition. For example, the composition may include a metal ion chosen from aluminum, copper, iron, zinc, and mixtures thereof. In some embodiments, the composition includes iron ions (e.g., ferric sulfate). In other embodiments, the composition further includes a solubilizing ligand (e.g., citric acid).

In addition to the surfactants described above, the composition may include, or be free of, one or more additional surfactants such as cationic, nonionic, and anionic surfactants. Suitable classes of cationic surfactants include primary, secondary and tertiary alkylamines, primary, secondary and tertiary alkylammonium salts in which an amine group is substantially protonated in the formulation, onium salts such as quaternary alkylammonium salts, and mixtures thereof. A wide variety of primary, secondary, tertiary, quaternary and zwitterionic alkylamine and alkylammonium salt surfactants can be utilized in the preparation of the herbicidal compositions described herein. A subclass of primary, secondary, and tertiary alkylamine surfactants for use in the present compositions are alkyl amine oxides, alkyletheramines, and alkyletheramine oxides.

In other embodiments, the composition may include or be free of one or more foam-moderating agents.

Suitable foam-moderating agents include silicone-based compositions. An example of a foam- moderating agent for compositions is SAG- 10, available from GE Silicones Corporation (Wilton, Conn.). The amount of foam-moderating agent optionally employed is that which is sufficient to inhibit and/or reduce an amount of foam that may otherwise be formed during the process of preparing and containerizing the formulation and/or use thereof to a desired and satisfactory level. Generally, the concentration of foam-moderating agent is from about 0.001% up to about 0.05% by weight of the composition, and typically from about 0.01% to about 0.03% by weight of the composition, although greater or lesser amounts may be employed.

In still other embodiments, the composition may also include or be free of a preservative such as PROXEL GXL including 1,2-benzisothiazolin-3-one (CAS No. 2634-33-5) available from Avecia, Inc. (Wilmington, Del.), DOWICIL 150 including cis-1-(3-chloroallyl)-3,5,7-triaza-1-azoniaadmatane chloride (CAS No. 051229-78-8) available from Dow Chemical Company (Midland, Mich.), NIPACIDE BIT20DPG including benzisothiazolinone available from Clariant Corporation (Greensboro, N.C.), LEGEND MK anti-microbial biocide available from Rohm and Haas Co. (Philadelphia, Pa.), sorbic acid, mixtures thereof and the like in an amount of from about 0.01% to about 0.2% by weight, typically about 0.1% by weight of the composition. In various non-limiting embodiments, all values and ranges of values, both whole and fractional, including and between those described above are hereby expressly contemplated for use herein.

In still other embodiments, the composition may also include or be free of an antifreeze agent such as ethylene glycol and propylene glycol which y may be present at a concentration of from about 0.1 to about 10 weight percent actives based on a total weight of the composition. Antifreeze agents assist in lowering the freezing point of aqueous solutions and maintaining solubility of the components of the composition such that components do not crystallize or precipitate during cycles of freezing and thawing. In various non-limiting embodiments, all values and ranges of values, both whole and fractional, including and between those described above are hereby expressly contemplated for use herein.

Although the compositions generally show good overall stability and viscosity properties without the addition of any further additives, the addition of a solubility-enhancing agent (also commonly referred to as a cloud point enhancer or stabilizer) may significantly improve the properties of the compositions. Solubility-enhancing agents can include polymer derivatives of ethylene glycol and propylene glycol (e.g., 200-1200 average molecular weight), glycerol, sugars, mixtures thereof and the like in amounts up to about 10 %, e.g. about 0.05 to about 10%, or about 0.1 to about 1% by weight of the composition. In various non-limiting embodiments, all values and ranges of values, both whole and fractional, including and between those described above are hereby expressly contemplated for use herein.

In another embodiment, the disclosure provides an aqueous herbicidal composition comprising water and glyphosate or a derivative thereof present in an amount of from about 300 to about 700 grams acid equivalent per liter; a phosphate ester present in an amount of from about 0.5 to about 3 weight percent actives based on a total weight of said composition; a surfactant component comprising at least one of: (1) a first surfactant present in an amount of from about 3 to about 12 weight percent actives based on a total weight of said composition and having the structure: 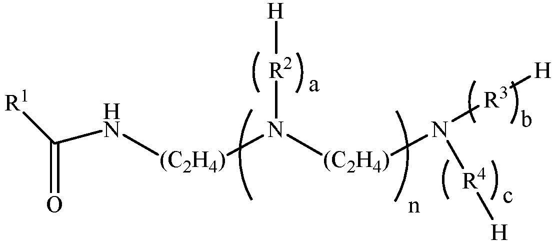 wherein R¹ is a soy group, and each of R², R³ and R⁴ comprises an ethylene oxide group, a is about 1 to about 6; each of b and c is independently about 4 to about 5; and n is about 1; and (2) a second surfactant present in an amount of from about 2 to about 8 weight percent actives based on a total weight of said composition and having the structure: 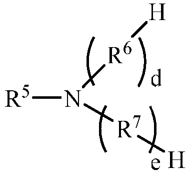 wherein R⁵ is a coco group, moiety, or residue, each of R⁶ and R⁷ comprises an ethylene oxide group, and each of d and e is independently about 1, and (3) a third surfactant present in an amount of from about 1 to about 15 weight percent actives based on a total weight of said composition and having the structure: 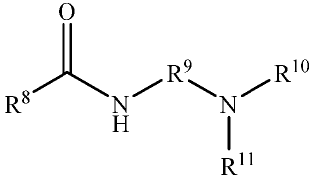 wherein R⁸ is an alkyl or alkenyl group each optionally substituted with from 4 to 22 carbon atoms, R⁹ is an alkylene group having from 1 to 4 carbon atoms, and each of R¹⁰ and R¹¹ is independently an alkyl group having from 1 to 4 carbon atoms; and a co-herbicide.
In other embodiments, one or two alkyl amine ethoxylates can be used in combination with the phosphate ester. In one embodiment, R⁵ is a tallow moiety and each of d and e is independently 4-5, In other embodiments, R⁵ is a coco moiety and each of d and e is 1. In still other embodiments, the second surfactant is used alone with the phosphate ester and R⁵ is a coco moiety and each of d and e is 1-3. In another embodiment, R⁵ is a tallow moiety and each of d and e is independently be 4-5 and the second surfactant is used in combination with coco amine ethoxylates wherein each of d and e is 1.

### Physical Properties

Referring back to the composition as a whole, the composition is not limited to any particular pH. In various embodiments, the pH can contribute to stability, cloud point, compatibilization of glyphosate salts with the surfactants used, and compatibilization with co-herbicides, if added. In various embodiments, the pH is from about 4 to about 8, about 5 to about 7, about 6 to about 8, etc. In one embodiment, the pH is from about 4.5 to about 5.5. In other embodiments, the pH is from about 5.5 to about 6.5. pH adjusting agents for acidic adjustment include mineral acids such as, for example, hydrochloric acid, nitric acid or sulfuric acid, and organic acids such as, for example, acetic acid or dicarboxylic acids. pH adjusting agents for alkaline adjustment include, for example, sodium hydroxide, potassium hydroxide, ammonia, and organic bases, such as IPA, MEA, and DMA. In various non-limiting embodiments, all values and ranges of values, both whole and fractional, including and between those described above are hereby expressly contemplated for use herein.

Referring to compatibility, the compatibility of the composition is typically measured as a function of the compatibility of the glyphosate and the first and second surfactants. This can be reported as cloud point. As is known in the art, cloud point is the temperature above which a transparent solution undergoes either a liquid-liquid phase separation or a liquid-solid phase transition. Cloud point may be described as the minimum temperature at which the first crystal formation begins. The higher the cloud point, the better the compatibility between the glyphosate and the first, the second, and the third surfactants or their combinations. Typically, the compositions of this disclosure remain stable before reaching the cloud point. In various embodiments, the composition has a cloud point of at least room temperature or at least about 25, 30, 35, 40, 45, 50, 55, 60, 65, 70, 75, 80, or 85, °C or even higher. Typically, the composition can be evaluated to determine cloud point using the following procedure. The composition is poured into a 25 mm x 200 mm PYREX test tube to a level of approximately 2 inches from the bottom. The test sample is heated until cloudy using a hot water bath. Once the composition becomes cloudy, or the temperature reaches 100 °C, the test sample is removed from the water bath. If the composition remains clear throughout the test, the cloud point is recorded as 100°C. If cloudy, the composition is stirred until it becomes clear. The temperature at which the test sample becomes clear is recorded as the cloud point.

Tank-mix compatibility can also be determined using a TURBISCAN^{®} LAB stability analyzer reporting data as the Turbiscan Stability Index (TSI), which is recognized in the art. Here, a lower value indicates good compatibility while a higher value indicates faster flocculation. The TSI can be calculated by Turbiscan based on the change of the backscattering of a suspension of the composition as a function of time. Alternatively, the TSI can be reported as a change of backscattering after 30 minutes of mixing the composition with additional additives, e.g. those used in a tank-mix.

In various embodiments, the composition exhibits "stability over time" meaning that, for example, the composition may be in the form of an that may exhibit a stability of at least 4, 5, 6, 7, 8, 9, 10, 11, 12, 13, 14, or 15+ weeks at any temperature from about 5 to about 45°C or any value or range of values therebetween, e.g. at room temperature, measured using a TURBISCAN^{®} LAB stability analyzer. For example, emulsion "stability" can be quantitatively measured using a TURBISCAN^{®} LAB stability analyzer that is used to obtain an initial backscattering signal for a sample of the emulsion. The samples can be stored at any temperature from about zero to about 45°C or 50°C or any value or range of values therebetween, e.g. at room temperature, and then scanned periodically over the course of 1, 2, 3, 4, 5, 6, 7, 8, 9, 10, 11, 12, 13, 14, or 15+ weeks. In various embodiments, the emulsion may be stable for at least any number of weeks described above when stored at room temperature. In other embodiments, the emulsion may be stable for at least any number of weeks described above when stored at 45°C. All values and ranges of values, including and between those set forth above, are hereby expressly contemplated for use herein in various non-limiting embodiments.

To determine stability, the emulsions can be added to glass vials. The diameter of the vial is about 1 inch and height about 2 inch. The emulsion sample is added into the vial to ensure that there are not any air bubbles or cavities in the fluid. The height of the filling is about 1 5/8 inch or 42mm. After filling, the TurbiScan samples can be conditioned at the desired aging condition for one day before the initial scan is taken. The reading of the TurbiScan is typically done when the sample is cooled down to about 22°C.

Backscattering signals as measured over time can be compared with the signals of the initial samples. More specifically, if the maximum difference of a subsequent backscattering signal relative to the initial signal is larger than 20%, the days to reach this 20% difference in backscattering signal can be recorded as a measure of the stability, or "Turbiscan^{®} Time." The longer this time is, the more stable the emulsion. This technique is able to detect potential instability of a sample well before such instability can be visually observed. The software supplied with the TurbiScan is used for the purpose of data analysis, not only back scattering intensity, but also the oil droplet size variation over time.

Without intending to be bound by theory, it is believed that the phosphate ester allows the suspension to remain stable when in-tank and mixed with other components that would otherwise cause instability.

In various embodiments, the composition is described as a tank-mix composition that includes water as a spray vehicle, in an amount suitable for application to a plant and/or soil surface by spraying, more particularly in an amount suitable for delivery of the glyphosate and phenoxy-type herbicides to plants, for example weeds, that are to be killed or controlled. Amounts of water are usually expressed in terms of "spray volume", i.e., the volume of spray solution (which is mostly water, making up the balance after accounting for other components) to be applied to a unit land area. Spray volume can be expressed in any suitable units such as liters/hectare (l/ha) or gallons/acre. Most commonly, spray volumes useful for tank-mix compositions of the present invention will be selected in a range of about 10 to about 1,000 l/ha, for example about 25 to about 500 l/ha. All values and ranges of values, including and between those set forth above, are hereby expressly contemplated for use herein in various non-limiting embodiments.

Tank-mix compatibility challenges of glyphosate compositions tend to be most severe at low spray volumes, where a spray solution having higher concentrations of both the glyphosate and a co-herbicide is prepared. Thus, while tank-mix compositions are useful at least across the wide range of spray volumes described above, these compositions bring especial benefit at low to moderate spray volumes, such as, for example, spray volumes of about 10 to about 200 l/ha, illustratively about 25 to about 100 1/ha, for example about 46.8 l/ha (5 U.S. gallons/acre) or about 93.5 1/ha (10 U.S. gallons/acre). All values and ranges of values, including and between those set forth above, are hereby expressly contemplated for use herein in various non-limiting embodiments.

Tank-mix compatibility can also affected by aspects of water quality, especially water "hardness" resulting from presence of divalent and trivalent cations, mainly calcium (Ca²⁺) and magnesium (Mg²⁺) ions. Hardness is often expressed as parts per million (ppm or mg/l) calcium carbonate (CaCO₃), but typically includes all Ca²⁺ and Mg²⁺ ions, expressed as CaCO₃ equivalent concentration. Compatibility challenges tend to be greatest in hard water, for example water having hardness greater than about 75 ppm, more particularly where greater than about 150 ppm, especially where greater than about 300 ppm. Tank-mix compositions of this disclosure are typically prepared using water of hardness up to about 1,000 ppm or even higher. All values and ranges of values, including and between those set forth above, are hereby expressly contemplated for use herein in various non-limiting embodiments.

### Method of Forming the Composition

The composition may be formed using any method known in the art. For example, the composition may be formed by combining (a), (b), and (c), and any additives or water, in batch form or continuously, e.g. using a mechanical stirrer or any other suitable container or device producing the necessary amount of agitation or circulation to thoroughly mix the ingredients. The order of addition may be any combination of ingredients either in whole or in part. In one embodiment, water is added to a mixing vessel, followed by the addition of the glyphosate salt and then the first and/or second surfactants. In some embodiments, a co-surfactant may be added as a preblended mixture. Co-surfactants may be added singly, either before or after addition of the first and second surfactants.

### Method for Killing Weeds

This disclosure also provides a method for killing or controlling weeds or other unwanted plants by spraying or otherwise applying a herbicidally effective amount of the composition to the foliage of the plants to be treated via any known method. In some embodiments, the composition is packaged in a portable container suitable for hand carry by a user and fitted with an apparatus for manually releasing the composition from the container onto the foliage of the plants to be treated in the form of a spray.

The composition can be used to kill or control the growth of a wide variety of plants including, without limitation, velvetleaf *(Abutilon theophrasti),* pigweed *(Amaranthus spp.),* buttonweed *(Borreria spp.),* oilseed rape, canola, indian mustard, etc. *(Brassica spp.),* commelina *(Commelina spp.),* filaree *(Erodium spp.),* sunflower *(Helianthus spp.),* morningglory *(Ipomoea spp.),* kochia *(Kochia scoparia),* mallow *(Malva spp.),* wild buckwheat, smartweed, etc. *(Polygonum spp.),* purslane *(Portulaca spp.),* Russian thistle *(Salsola spp.),* sida *(Sida spp.),* wild mustard *(Sinapis arvensis)* and cocklebur *(Xanthium spp.).*

Other plant species that may be killed or controlled include, without limitation, wild oat *(Avenafatua),* carpetgrass *(Axonopus spp.),* downy brome *(Bromus tectorum),* crabgrass *(Digitaria spp),* barnyardgrass *(Echinochloa crus-galli),* goosegrass *(Eleusine indicd),* annual ryegrass *(Lolium multiflorum),* rice *(Oryza sativa),* ottochloa *(Ottochloa nodosa),* bahiagrass *(Paspalum notatum),* canarygrass *(Phalaris spp.),* foxtail *(Setaria spp.),* wheat *(Triticum aestivum)* and corn *(Zea mays).*

Other plant species that may be killed or controlled include, without limitation, mugwort *(Artemisia spp.),* milkweed *(Asclepias spp.),* Canada thistle *(Cirsium arvense),* field bindweed *(Convolvulus arvensis)* and kudzu *(Pueraria spp.).*

Other plant species that may be killed or controlled include, without limitation, brachiaria *(Brachiaria spp.),* bermudagrass *(Cynodon dactylon),* quackgrass *(Elymus repens),* lalang *(Imperata cylindrica),* perennial ryegrass *(Lolium perenne),* guineagrass *(Panicum maximum),* dallisgrass *(Paspalum dilatatum),* reed *(Phragmites spp.),* johnsongrass *(Sorghum halepense)* and cattail *(Typha spp.).*

Other plant species that may be killed or controlled include, without limitation, horsetail *(Equisetum spp.),* bracken *(Pteridium aquilinum),* blackberry *(Rubus spp)* and gorse *(Ulex europaeus).*

### EXAMPLES

A series of Example compositions 1-24 and Comparative Examples A, B, and C were formed as shown below and evaluated to determine cloud point and TSI value.

Cloud point is determined as described above. The higher the cloud point, the better the compatibility between the surfactants and glyphosate. The data below shows that by adding a phosphate ester as an adjuvant in glyphosate, the concentrate remains stable before reaching the reported cloud point.

Tank-mix compatibility between glyphosate composition that include the surfactants described below and also include a second pesticide (e.g. Aatrex 4L, Atrazine 4L, or Caparol 4L) is measured using a TURBISCAN^{®} LAB stability analyzer reporting data as the Turbiscan Stability Index (TSI). A second pesticide is diluted first, and the glyphosate formulation is added later after at the pre-defined use rate. The tank-mixed dilution is then placed in Turbiscan to monitor the backscattering as a function of time. The TSI is calculated based on the change of the backscattering over 30 minutes. Relative to the TSI, a lower value indicates a stable tank-mixed dilution due to the good compatibility between the glyphosate formulation and a second pesticide product, while a higher value indicates faster flocculation in the tank-mixed dilution.

The data for Comparative Examples A, B, and C indicates that the glyphosate formulation without phosphate ester is not compatible with the second pesticide/co-herbicide (e.g. Aatrex 4L, Atrazine 4L, or Caparol 4L). The high value of TSI indicates the fast sedimentation in a diluted suspension. After adding the phosphate esters, the TSI value dropped, meaning that the compatibility is greatly improved.

**TABLE 1**

| **Ex** | **First Surfactant/ wt% actives** | **Second Surfactant/ wt% actives** | **Phosphate Ester/ wt % actives** | **Cloud point (°C)** | **TSI Value Aatrex 4L** |
|---|---|---|---|---|---|
| A | Surfactant A/ 5.0 % | Surfactant B/ 5.0% | --- | 79.0 | * |
| 1 | Surfactant A/4.4% | Surfactant B/ 4.4% | Phosphate A/ 1.2% | 41.0 | 3.80 |
| 2 | Surfactant A/ 4.4% | Surfactant B/ 4.4% | Phosphate B/ 1.2% | 38.0 | 4.60 |
| 3 | Surfactant A/4.5% | Surfactant B/ 4.5% | Phosphate B/ 1.0% | 53.0 | 13.5 |
| 4 | Surfactant A/4.6% | Surfactant B/ 4.6% | Phosphate B/ 0.8% | 67.0 | 14.00 |
| 5 | Surfactant A/4.4% | Surfactant B/ 4.4% | Phosphate C/ 1.2% | 40.0 | 3.50 |
| 6 | Surfactant A/4.4% | Surfactant B/ 4.4% | Phosphate D/ 1.2% | 43.6 | 4.10 |
| 7 | Surfactant A/4.4% | Surfactant B/ 4.4% | Phosphate E/ 1.2% | 50.0 | 5.10 |
| 8 | Surfactant A/4.4% | Surfactant B/ 4.4% | Phosphate F/ 1.2% | 47.0 | 11.40 |
| 9 | Surfactant A/4.4% | Surfactant B/ 4.4% | Phosphate G/ 1.2% | 39 | 5.2 |
| 10 | Surfactant A/4.4% | Surfactant B/ 4.4% | Phosphate H/ 1.2% | 49 | 13.7 |
| 11 | Surfactant A/4.4% | Surfactant B/ 4.4% | Phosphate I/ 1.2% | 55 | 4.6 |
| 12 | Surfactant A/4.4% | Surfactant B/ 4.4% | Phosphate J/ 1.2% | 55 | 9.3 |

| | | | | | |
|---|---|---|---|---|---|
| *Example A produced a TSI value of 14.20 for Aatrex 4L; 9.00 for Atrazine 4L; and 8.00 for Caparol 4L | | | | | |

K-glyphosate is 540 g a.e./L for all of the above.

Surfactant A is Soy-DETA-12.5 EO.

Surfactant B is cocoamine-2EO.

Phosphate A is an iso C10 ethoxylated phosphate ester ethoxylated with 2 moles of ethylene oxide.

Phosphate B is an iso C10 ethoxylated phosphate ester ethoxylated with 3 moles of ethylene oxide.

Phosphate C is an iso C13 ethoxylated phosphate ester ethoxylated with 2 moles of ethylene oxide.

Phosphate D is an iso C13 ethoxylated phosphate ester ethoxylated with 3 moles of ethylene oxide.

Phosphate E is an iso C13 ethoxylated phosphate ester ethoxylated with 4 moles of ethylene oxide.

Phosphate F is an iso C13 ethoxylated phosphate ester ethoxylated with 5 moles of ethylene oxide.

Phosphate G is a linear C10 ethoxylated phosphate ester ethoxylated with 3 moles of ethylene oxide.

Phosphate H is a linear C10 ethoxylated phosphate ester ethoxylated with 4 moles of ethylene oxide.

Phosphate I is a linear C12-C14 ethoxylated phosphate ester ethoxylated with 2 moles of ethylene oxide.

Phosphate J is a linear C12-C14 ethoxylated phosphate ester ethoxylated with 3 moles of ethylene oxide.

**TABLE 2**

| **Ex** | **Second Surfactant/ wt% actives** | **Second Surfactant/ wt% actives** | **Phosphate Ester/ wt % actives** | **Cloud point (°C)** | **TSI Value Atrazine 4L** | **TSI Value Caparol 4L** |
|---|---|---|---|---|---|---|
| B | Surfactant C/ 5.0 % | Surfactant B/ 5.0% | --- | 70.0 | * | * |
| 13 | Surfactant C/4.4% | Surfactant B/ 4.4% | Phosphate J/ 1.2% | p.s | 14.40 | 12.50 |
| 14 | Surfactant C/ 4.2% | Surfactant B/ 4.2% | Phosphate E/ 1.6% | 34.0 | 14.80 | N/A |
| 15 | Surfactant C/4.4% | Surfactant B/ 4.4% | Phosphate L/ 1.2% | 64.0 | N/A | 15.60 |
| 16 | Surfactant C/4.4% | Surfactant B/ 4.4% | Phosphate B/ 1.2% | 47.0 | 16.20 | 15.90 |
| 17 | Surfactant C/4.4% | Surfactant B/ 4.4% | Phosphate M/ 1.2% | 53.0 | 16.30 | 15.90 |

| | | | | | | |
|---|---|---|---|---|---|---|
| *Example B produced a TSI value of 18.10 for Aatrex 4L; 16.80 for Atrazine 4L; and 18.30 for Caparol 4L | | | | | | |

K-glyphosate is 540 g a.e./L for all.

Surfactant C is tallowamine 8EO.

Phosphate K is a linear C14 ethoxylated phosphate ester ethoxylated with 3 moles of ethylene oxide.

Phosphate L is an iso C10 ethoxylated phosphate ester ethoxylated with 5 moles of ethylene oxide and propoxylated with 5 moles of propylene oxide.

Phosphate M is an iso C8 ethoxylated phosphate ester ethoxylated with 4.8 moles of ethylene oxide.

**TABLE 3**

| **Ex** | **Third Surfactant/ wt% actives** | **Phosphate Ester/ wt % actives** | **Cloud point (°C)** | **TSI Value Atrazine 4L** | **TSI Value Caparol 4L** |
|---|---|---|---|---|---|
| C | Surfactant D/ 10.0 % | --- | >80 | * | * |
| 18 | Surfactant D/ 8.8% | Phosphate B/ 1.2% | >70 | 9.50 | 7.20 |
| 19 | Surfactant D/ 8.8% | Phosphate B/ 1.2% | >80 | 6.1 | N/A |
| 20 | Surfactant D/ 8.8% | Phosphate N/ 1.2% | >80 | 5.4 | N/A |
| 21 | Surfactant D/ 8.8% | Phosphate O/ 1.2% | >80 | 10.9 | N/A |
| 22 | Surfactant D/ 8.8% | Phosphate P/ 1.2% | >70 | 6.5 | 8.7 |
| 23 | Surfactant D/ 8.8% | Phosphate Q/ 1.2% | >80 | 7.7 | 8.6 |
| 24 | Surfactant D/ 8.8% | Phosphate R/ 1.2% | >80 | 7.9 | N/A |

| | | | | | |
|---|---|---|---|---|---|
| * Example C produced a TSI value of 14.40 for Aatrex 4L; 14.80 for Atrazine 4L; and 9.10 for Caparol 4L | | | | | |

K-glyphosate is 540 g a.e./L for all.

Surfactant D is cocoamidopropyl amine.

Phosphate N is an iso C10 ethoxylated phosphate ester ethoxylated with 5 moles of ethylene oxide.

Phosphate O is an iso C10 ethoxylated phosphate ester ethoxylated with 7 moles of ethylene oxide.

Phosphate P is an iso C12 ethoxylated phosphate ester ethoxylated with 5 moles of ethylene oxide.

Phosphate Q is an iso C10 ethoxylated phosphate ester ethoxylated with 6 moles of ethylene oxide and propoxylated with 3 moles of propylene oxide and having a molar ratio of Monoester:Diester of about 1.5.

Phosphate R is an iso C10 ethoxylated phosphate ester ethoxylated with 6 moles of ethylene oxide and propoxylated with 3 moles of propylene oxide and having a molar ratio of Monoester:Diester of about 3.

The data set forth above is superior to the art because it is difficult to formulate in-can compositions with glyphosate that resist phase separation and exhibit compatibility with other additives. The current technology solves problems for farmers so that they do not have to add anything else such as another compatibilizer when mixing the claimed in-can formulation and other pesticide in-can formulations in a tank-mix application. This data is unexpected because alkoxylated compounds are known to not be compatible with glyphosate in-can and it is difficult and unpredictable to find an adjuvant additive that works both in can and with tank mix, and yet this technology works very well.

### Herbicidal Effectiveness

Examples 2, 7, 9, and 11 above are further evaluated to determine herbicidal effectiveness (i.e., weed efficacy of individual samples against wheat) as compared to a K-Glyphosate only control and a Roundup Weathermax positive control. The results are set forth in FIG. 1. More specifically, the herbicidal effectiveness data set forth herein report "control" as a percentage following a standard procedure known in the art which reflects a visual assessment of plant mortality and growth reduction by comparison with untreated plants, made by technicians trained to make and record such observations. In all cases, a single technician makes all assessments of percent control within any one experiment or trial. Percent control of individual weed species was visually evaluated 7-28 days after application. Each sample is applied at 200 g ae/ha, 350 g ae/ha and 500 g ae/ha, respectively, calculated on a glyphosate acid equivalent (a.e.) basis to ensure the same amount of glyphosate acid was applied regardless of the type of glyphosate salt in the formulation. The Roundup Weathermax commercial standard was included in each trial as a positive control. High injury indicates high herbicidal effectiveness.

This data shows the formulation of this disclosure provides comparable bioefficacy (effectiveness in weeds control) compared to the positive control. The data set forth above is superior to, and unexpected over, the art because it is known in the art to be difficult to formulate in-can compositions with glyphosate that resist phase separation and exhibit compatibility with other additives without negatively affecting bioefficacy. The current technology solves problems for farmers so that they do not need to add any additional components, such as compatibilizers, when mixing in-can formulations in tank-mix applications while achieving the same bioefficacy. This data is further unexpected because it is known that alkoxylated compounds are not compatible with glyphosate in-can and it is difficult and unpredictable to find an adjuvant additive that works both in can and with tank mix without affecting the bioefficacy of the whole formulation. Yet, the technology of this disclosure works surprisingly well.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment. It being understood that various changes may be made in the function and arrangement of elements described in an exemplary embodiment without departing from the scope as set forth in the appended claims.

The present disclosure may be further described by the following Aspects.
Aspect 1. A herbicidal composition comprising:
   (a) glyphosate or a derivative thereof;
   (b) a phosphate ester present in an amount of from about 1 to about 15 weight percent actives based on a total weight of said composition; and
   (c) a surfactant component comprising at least one of:
      (1) a first surfactant present in an amount of from about 1 to about 15 weight percent actives based on a total weight of said composition and having the structure: 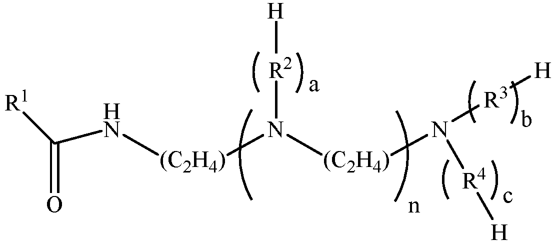
         wherein R¹ is a linear or branched, saturated or unsaturated alkyl group having from 5 to 22 carbon atoms,
         each of R², R³ and R⁴ is independently an alkylene oxide group,
         a is from 0 to 10,
         each of b and c is independently from about 1 to about 10; and
         n is 0 to about 3; or
      (2) a second surfactant present in an amount of from about 1 to about 15 weight percent actives based on a total weight of said composition and having the structure: 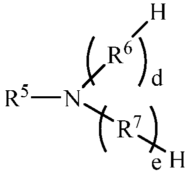
         wherein R⁵ is a linear or branched, saturated or unsaturated alkyl group having from 8 to 18 carbon atoms,
         each of R⁶ and R⁷ is independently an alkylene oxide group, and
         each of d and e is independently from about 1 to about 5; or
      (3) a third surfactant present in an amount of from about 1 to about 15 weight percent actives based on a total weight of said composition and having the structure: 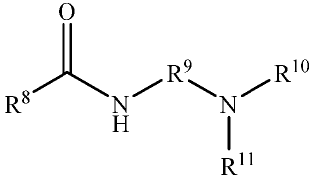 wherein R⁸ is a linear or branched alkyl or alkenyl group each optionally substituted with from 4 to 22 carbon atoms, R⁹ is an alkylene group having from 1 to 4 carbon atoms, and each of R¹⁰ and R¹¹ is independently an alkyl group having from 1 to 4 carbon atoms.
**Aspect 2.** The composition of Aspect 1 wherein the phosphate ester has the formula:

   {R¹²O-[CH(CH₃)CH₂O)]_{g}[CH₂-CH₂O]_{f}}ₓP(=O)(O⁻X⁺)_{y} (I)

   wherein the propylene oxide group and the ethylene oxide group may be reversed in order, and wherein f is from 0 to about 50 and g is from 0 to about 30 so long as f+g > 0;
   wherein each of x and y is independently 1 or 2, such that when x = 1 then y = 2, and when x = 2 then y = 1; and
   wherein R¹² is a linear or branched C₁-C₃₀ alkyl or alkenyl group and X⁺ is H⁺, an earth metal or alkaline earth metal ion, NH4⁺, an amine, an alkanolamine or CH₃-(CH₂)ⱼ-C(O)NH(CH₂)ₖN⁺HR¹³R¹⁴, wherein j is from 0 to about 30, k is from about 1 to about 5, and each of R¹³ and R¹⁴ is independently chosen from -CH₂CH₂OH and linear or branched alkyl groups having 1 to 5 carbon atoms.
**Aspect 3.** The composition of Aspect 2 wherein the phosphate ester comprises:
   a phosphate monoester having the formula:

      {R¹²O-[CH(CH₃)CH₂O)]_{g}[CH₂-CH₂O]_{f}}ₓP(=O)(O⁻X⁺)_{y}
   wherein R¹² is a linear or branched C8-C18 alkyl group, g is 0, f is 0 to 8, x is 1, and y is 2; and
   a phosphate diester having the formula:

      {R¹²O-[CH(CH₃)CH₂O)]_{g}[CH₂-CH₂O]_{f}}ₓP(=O)(O⁻X⁺)_{y} (I)
   wherein R¹² is a linear or branched C8-C18 alkyl group, g is 0, f is 0 to 8, x is 2, and y is 1.
**Aspect 4.** The composition of any preceding Aspect wherein the phosphate ester is present in an amount of from about 0.5 to about 3 weight percent actives based on a total weight of the composition.
**Aspect 5.** The composition of any preceding Aspect wherein the R¹ is a linear alkyl group having from about 12 to about 18 carbon atoms.
**Aspect 6.** The composition of any one of Aspects 1-4 wherein R¹ is chosen from a soy group and a coco moiety.
**Aspect 7.** The composition of any one of Aspects 1-4 wherein the R¹ is a soy group and n is 1.
**Aspect 8.** The composition of any one of Aspects 1-4 wherein the R¹ is a coco moiety and n is 1.
**Aspect 9.** The composition of any preceding Aspect wherein R² comprises an alkylene oxide group.
**Aspect 10.** The composition of Aspect 9 wherein the alkylene oxide group is an ethylene oxide group and a is from about 1 to about 6.
**Aspect 11.** The composition of Aspect 10 wherein a is about 1-4.
**Aspect 12.** The composition of any preceding Aspect wherein R⁵ is a coco moiety.
**Aspect 13.** The composition of any preceding Aspect wherein each of R⁶ and R⁷ is an ethylene oxide group.
**Aspect 14.** The composition of any preceding Aspect wherein each of d and e is about 1.
**Aspect 15.** The composition of any preceding Aspect wherein the (1) first surfactant is present in an amount of from about 3 to about 12 weight percent actives based on a total weight of said composition.
**Aspect 16.** The composition of any preceding Aspect wherein the (2) second surfactant is present in an amount of from about 3 to about 12 weight percent actives based on a total weight of said composition.
**Aspect 17.** The composition of any preceding Aspect wherein the (3) third surfactant is present in an amount of from about 3 to about 12 weight percent actives based on a total weight of said composition.
**Aspect 18.** The composition of any preceding Aspect wherein R⁸ is Coco, R⁹ is -CH₂CH₂CH₂-, and each of R¹⁰ and R¹¹ is CH₃.
**Aspect 19.** The composition of any preceding Aspect wherein two (2) second surfactants are used.
**Aspect 20.** An aqueous herbicidal composition comprising water and:
   (a) glyphosate or a derivative thereof present in an amount of from about 300 to about 700 grams acid equivalent per liter;
   (b) an alkoxylated phosphate ester present in an amount of from about 0.5 to about 3 weight percent actives based on a total weight of said composition;
   (c) a surfactant component comprising at least one of:
      (1) a first surfactant present in an amount of from about 3 to about 12 weight percent actives based on a total weight of said composition and having the structure: 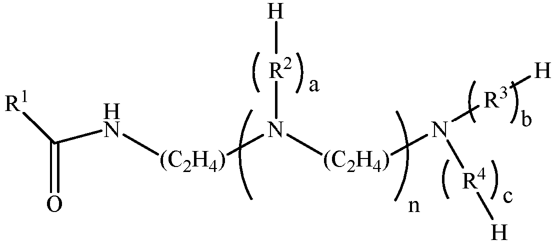
         wherein R¹ is a soy group, and each of R², R³ and R⁴ comprises an ethylene oxide group,
         a is about 1 to about 6;
         each of b and c is independently about 4 to about 5; and
         n is about 1; and
      (2) a second surfactant present in an amount of from about 2 to about 8 weight percent actives based on a total weight of said composition and having the structure: 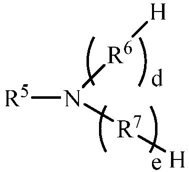
         wherein R⁵ is a tallow or coco moiety,
         each of R⁶ and R⁷ comprises an ethylene oxide group, and
         each of d and e is independently about 1 to about 5, and
      (3) a third surfactant present in an amount of from about 1 to about 15 weight percent actives based on a total weight of said composition and having the structure: 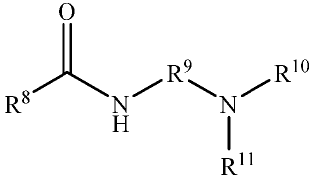 wherein R⁸ is an alkyl or alkenyl group each optionally substituted with from 4 to 22 carbon atoms, R⁹ is an alkylene group having from 1 to 4 carbon atoms, and each of R¹⁰ and R¹¹ is independently an alkyl group having from 1 to 4 carbon atoms; and
   (d) a co-herbicide.

## Claims

1. A herbicidal composition comprising:
(a) glyphosate or a derivative thereof;
(b) a phosphate ester present in an amount of from about 1 to about 15 weight percent actives based on a total weight of said composition; and
(c) a surfactant component comprising at least one of:
(1) a first surfactant present in an amount of from about 1 to about 15 weight percent actives based on a total weight of said composition and having the structure: 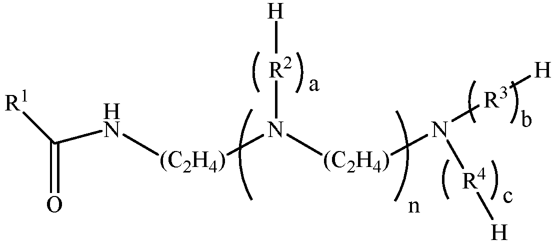
wherein R¹ is a linear or branched, saturated or unsaturated alkyl group having from 5 to 22 carbon atoms,
each of R², R³ and R⁴ is independently an alkylene oxide group,
a is from 0 to 10,
each of b and c is independently from about 1 to about 10; and
n is 0 to about 3; or
(2) a second surfactant present in an amount of from about 1 to about 15 weight percent actives based on a total weight of said composition and having the structure: 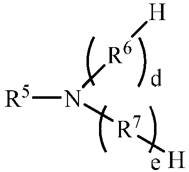
wherein R⁵ is a linear or branched, saturated or unsaturated alkyl group having from 8 to 18 carbon atoms,
each of R⁶ and R⁷ is independently an alkylene oxide group, and
each of d and e is independently from about 1 to about 5; or
(3) a third surfactant present in an amount of from about 1 to about 15 weight percent actives based on a total weight of said composition and having the structure: 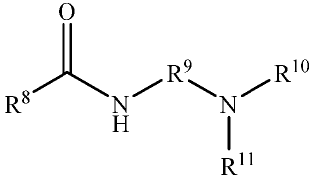 wherein R⁸ is a linear or branched alkyl or alkenyl group each optionally substituted with from 4 to 22 carbon atoms, R⁹ is an alkylene group having from 1 to 4 carbon atoms, and each of R¹⁰ and R¹¹ is independently an alkyl group having from 1 to 4 carbon atoms.

2. The composition of claim 1 wherein the phosphate ester has the formula:
{R¹²O-[CH(CH₃)CH₂O)]_{g}[CH₂-CH₂O]_{f}}ₓP(=O)(O⁻X⁺)_{y} (I)
wherein the propylene oxide group and the ethylene oxide group may be reversed in order, and wherein f is from 0 to about 50 and g is from 0 to about 30 so long as f+g > 0;
wherein each of x and y is independently 1 or 2, such that when x = 1 then y = 2, and when x = 2 then y = 1; and
wherein R¹² is a linear or branched C₁-C₃₀ alkyl or alkenyl group and X⁺ is H⁺, an earth metal or alkaline earth metal ion, NH4⁺, an amine, an alkanolamine or CH₃-(CH₂)ⱼ-C(O)NH(CH₂)ₖN⁺HR¹³R¹⁴, wherein j is from 0 to about 30, k is from about 1 to about 5, and each of R¹³ and R¹⁴ is independently chosen from -CH₂CH₂OH and linear or branched alkyl groups having 1 to 5 carbon atoms.

3. The composition of claim 2 wherein the phosphate ester comprises:
a phosphate monoester having the formula:
{R¹²O-[CH(CH₃)CH₂O)]_{g}[CH₂-CH₂O]_{f}}ₓP(=O)(O⁻X⁺)_{y}
wherein R¹² is a linear or branched C8-C18 alkyl group, g is 0, f is 0 to 8, x is 1, and y is 2; and
a phosphate diester having the formula:
{R¹²O-[CH(CH₃)CH₂O)]_{g}[CH₂-CH₂O]_{f}}ₓP(=O)(O⁻X⁺)_{y} (I)
wherein R¹² is a linear or branched C8-C18 alkyl group, g is 0, f is 0 to 8, x is 2, and y is 1.

4. The composition of any preceding claim wherein the phosphate ester is present in an amount of from about 0.5 to about 3 weight percent actives based on a total weight of the composition.

5. The composition of any preceding claims wherein the R¹ is a linear alkyl group having from about 12 to about 18 carbon atoms.

6. The composition of any one of claims 1-4 wherein R¹ is chosen from a soy group and a coco moiety.

7. The composition of any one of claims 1-4 wherein the R¹ is a soy group and n is 1 or wherein the R¹ is a coco moiety and n is 1.

8. The composition of any preceding claim wherein R² comprises an alkylene oxide group, wherein the alkylene oxide group is optionally an ethylene oxide group and a is optionally from about 1 to about 6.

9. The composition of any preceding claim wherein R⁵ is a coco moiety.

10. The composition of any preceding claim wherein each of R⁶ and R⁷ is an ethylene oxide group.

11. The composition of any preceding claim wherein each of d and e is about 1.

12. The composition of any preceding claim wherein the (1) first surfactant is present in an amount of from about 3 to about 12 weight percent actives based on a total weight of said composition, and/or
wherein the (2) second surfactant is present in an amount of from about 3 to about 12 weight percent actives based on a total weight of said composition, and/or
wherein the (3) third surfactant is present in an amount of from about 3 to about 12 weight percent actives based on a total weight of said composition.

13. The composition of any preceding claim wherein R⁸ is Coco, R⁹ is -CH₂CH₂CH₂-, and each of R¹⁰ and R¹¹ is CH₃.

14. The composition of any preceding claims wherein two (2) second surfactants are used.

15. An aqueous herbicidal composition comprising water and:
(a) glyphosate or a derivative thereof present in an amount of from about 300 to about 700 grams acid equivalent per liter;
(b) an alkoxylated phosphate ester present in an amount of from about 0.5 to about 3 weight percent actives based on a total weight of said composition;
(c) a surfactant component comprising at least one of:
(1) a first surfactant present in an amount of from about 3 to about 12 weight percent actives based on a total weight of said composition and having the structure: 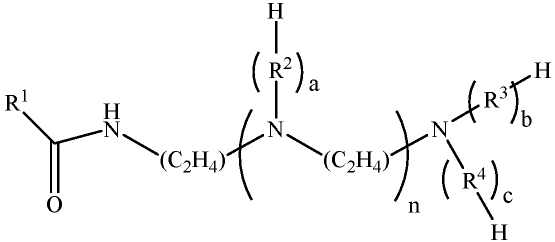
wherein R¹ is a soy group, and each of R², R³ and R⁴ comprises an ethylene oxide group,
a is about 1 to about 6;
each of b and c is independently about 4 to about 5; and
n is about 1; and
(2) a second surfactant present in an amount of from about 2 to about 8 weight percent actives based on a total weight of said composition and having the structure: 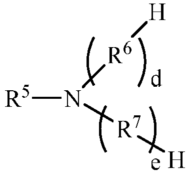
wherein R⁵ is a tallow or coco moiety,
each of R⁶ and R⁷ comprises an ethylene oxide group, and
each of d and e is independently about 1 to about 5, and
(3) a third surfactant present in an amount of from about 1 to about 15 weight percent actives based on a total weight of said composition and having the structure: 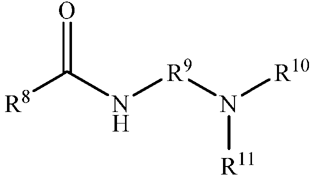 wherein R⁸ is an alkyl or alkenyl group each optionally substituted with from 4 to 22 carbon atoms, R⁹ is an alkylene group having from 1 to 4 carbon atoms, and each of R¹⁰ and R¹¹ is independently an alkyl group having from 1 to 4 carbon atoms; and
(d) a co-herbicide.
